# EUROPEAN PATENT APPLICATION

(11) **EP 1 838 037 A2**
(43) Date of publication of application: **26.09.2007**
(21) Application number: 07290055.8
(22) Date of filing: 16.01.2007
(51) Int. Cl.: H04L 12/24

(54) **Method of controlling emergency alert system in digital cable broadcasting, signal thereof and cable broadcast receiver**

(30) Priority: 17.02.2006 KR 20060015600
(71) Applicant: LG Electronics Inc., Yongdungpo-gu Seoul (KR)
(72) Inventor: Yun, Chang Sik, Gyeonggi-do 435-010 (KR)
(74) Representative: Loisel, Bertrand

(57) **Abstract**

A method of controlling an emergency alert system in digital cable broadcasting, signal thereof and cable broadcast receiver are disclosed, by which information for an emergency can be provided in various ways by considering levels of user's concern, preference and the like. The present invention includes a tuner unit receiving a cable broadcast including emergency alert system associated data, a demodulator unit demodulating the received cable broadcast, a user input unit setting an execution environment of the emergency alert system, a transmitter unit transmitting status diagnostic information for the execution environment of the emergency alert system, and a controller unit controlling the emergency alert system individually on a condition that the host is restricted according to the set execution environment of the emergency alert system.

## Description

This application claims the benefit of the Korean Patent Application No. 10-2006-0015600, filed on February 17, 2006, which is hereby incorporated by reference as if fully set forth herein.

### BACKGROUND OF THE INVENTION

### Field of the Invention

The present invention relates to cable broadcasting, and more particularly, to a method of controlling an emergency alert system in digital cable broadcasting, signal thereof and cable broadcast receiver.

### Discussion of the Related Art

Recently, natural disasters including an unexpected earthquake, a flood and the like or emergency situations including a terror, incendiarism and the like are frequently take place. Moreover, damages caused by the natural disaster due to an environmental pollution or by the terror are widely expanded and their spreading effects get more powerful.

Many efforts have been made to research and develop a useful emergency alert system using a broadcast network more efficiently in case of an emergency occurrence.

There is a method of operating an emergency alert system using a cable broadcast network among various broadcast networks.

For instance, in case of an emergency occurrence, a cable broadcasting station or the like transmits a warning message to control a cable broadcast receiver in a manner of enabling a warning message associated with the emergency to be outputted to a screen of the cable broadcast receiver or forcing the cable broadcast receiver to be tuned to a specific channel carrying a newsflash relating to the emergency.

The cable broadcast network can be mainly divided into a transmitting unit and a receiving unit. The transmitting unit of the cable broadcast network can be a cable broadcasting station that transmits cable broadcasts. And, the receiving unit of the cable broadcast network can be a cable broadcast receiver receiving the cable broadcasts transmitted from the cable broadcasting station and the like.

Generally, the cable broadcasting station is called an SO (system operator) headend or an MSO (multiple system operator) headend.

In this case, SO (system operator) is a unified wire broadcast provider (i.e., local cable TV broadcast provider) and at least tow system operators (SOs) are combined to be called a multiple system operator (MSO).

The cable broadcast receiver is able to employ an open cable system in which a POD (point of deployment) module including a conditional access (CA) system is separated from a main body.

For instance, the POD module uses a PCMCIA (Computer Memory Card International Association) card and is configured to be loaded/unloaded in/from a main body slot of the cable broadcast receiver.

So, the POD module is called a cable card as well.

The main body in which the POD module is inserted is called a host as well. For instance, a digital built-in TV, a digital ready TV or the like corresponds to a host.

And, the host and the POD module are combined to be called a cable broadcast receiver.

In the following specification of the present invention, a device capable of receiving a digital cable broadcast is named a host and a card capable of displaying a cable broadcast by being loaded in the host via a slot and the like is named a cable card.

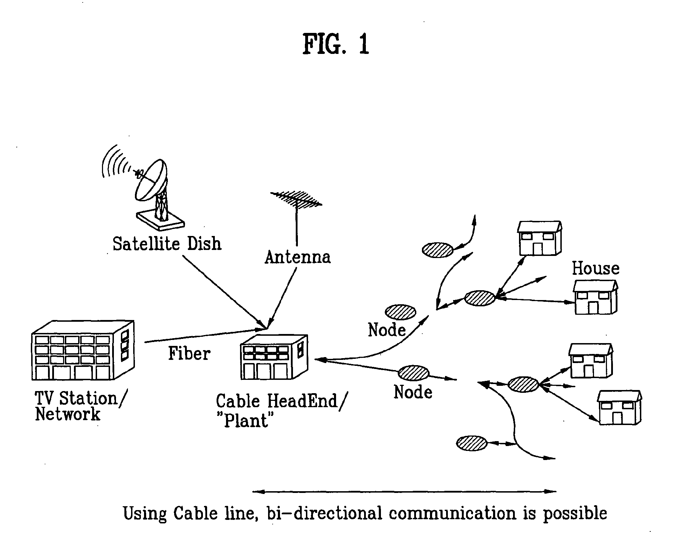

FIG. 1 is a conceptional diagram of a general cable broadcast network.

A control flow of operating a cable broadcast network is explained with reference to FIG. 1 as follows.

Referring to FIG. 1, a cable headend or plant receives broadcast signals via various communication networks from a television broadcasting station and the like.

The cable headend delivers the received cable broadcast signal to a cable broadcast receiver via a network including nodes.

A host and a cable card can transmit/receive signals to/from the cable headend. In this case, the corresponding transmission is achieved via a cable network capable of transferring data bi-directionally.

The host can be connected to various interfaces including a digital television, a DVD (digital versatile disc) player, a digital camcorder, a set-top box and the like.

However, a method of operating the emergency alert system in the related art cable broadcast network has the following problems.

First of all, a cable broadcast receiver is just operable according to operational information of an emergency alert system transmitted from a cable headend or the like regardless of user's concern or preference for an emergency.

Namely, the emergency alert system is unidirectionally operable on the related art cable broadcast network.

### SUMMARY OF THE INVENTION

Accordingly, the present invention is directed to a method of controlling an emergency alert system in digital cable broadcasting, signal thereof and cable broadcast receiver that substantially obviate one or more problems due to limitations and disadvantages of the related art.

An object of the present invention is to provide a method of controlling an emergency alert system in digital cable broadcasting, signal thereof and cable broadcast receiver, by which information for an emergency can be provided in various ways by considering levels of user's concern, preference and the like.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a host operating an emergency alert system of cable broadcasting includes the steps of setting an execution environment of the emergency alert system, transmitting status diagnostic information for the execution environment of the emergency alert system to a cable card, and executing the emergency alert system individually by the host on a limited condition according to the set execution environment of the emergency alert system.

Preferably, the step of transmitting the status diagnostic information for the execution environment of the emergency alert system to the cable card includes the steps of receiving a request for the status diagnostic information from the cable card and deciding whether the status diagnostic information for the execution environment of the emergency alert system is included in the status diagnostic information.

More preferably, the step of deciding whether the status diagnostic information for the execution environment of the emergency alert system is included in the status diagnostic information is carried out by parsing a diagnostic ID (diagnostic_ID).

Preferably, in the step of transmitting the status diagnostic information for the execution environment of the emergency alert system to the cable card, the status diagnostic information is transmitted according to a status diagnostic response protocol (diagnostic_cnf() APDU (application protocol data unit).

Preferably, in the step of setting the execution environment of the emergency alert system, the execution environment of the emergency alert system is set to just receive and output information for an emergency corresponding to a priority over a predetermined reference according to a user's preference.

Preferably, in the step of setting the execution environment of the emergency alert system, the execution environment of the emergency alert system is set to decide whether to receive and output information for an emergency per a mode for outputting an external A/V data instead of a cable broadcast mode according to a user's preference.

Preferably, in the step of setting the execution environment of the emergency alert system, the execution environment of the emergency alert system is set by a user using a displayed UI.

In another aspect of the present invention, a method of controlling a cable card operating an emergency alert system of cable broadcasting includes the steps of making a request for status diagnostic information for an execution environment of the emergency alert system to a host, receiving the status diagnostic information from the host, and transmitting the received information to a cable broadcasting station.

Preferably, in the step of making the request for the status diagnostic information for the execution environment of the emergency alert system to the host, the status diagnostic information is requested according to a status diagnostic request protocol (diagnostic_req() APDU (application protocol data unit).

In another aspect of the present invention, a host operating an emergency alert system of cable broadcasting includes a tuner unit receiving a cable broadcast including emergency alert system associated data, a demodulator unit demodulating the received cable broadcast, a user input unit setting an execution environment of the emergency alert system, a transmitter unit transmitting status diagnostic information for the execution environment of the emergency alert system, and a controller unit controlling the emergency alert system individually on a condition that the host is restricted according to the set execution environment of the emergency alert system.

Preferably, the transmitter unit further includes a decision unit deciding whether the status diagnostic information for the execution environment of the emergency alert system is included in the status diagnostic information if the status diagnostic information is received from the cable card.

More preferably, the decision unit decides whether the status diagnostic information for the execution environment of the emergency alert system is included in a manner of parsing a diagnostic ID (diagnostic_ID).

Preferably, the transmitter unit transmits the status diagnostic information according to a status diagnostic response protocol (diagnostic_cnf() APDU (application protocol data unit)).

Preferably, the user input unit sets the execution environment of the emergency alert system by enabling information for an emergency corresponding to a priority over a predetermined reference to be received and outputted only according to a user's preference.

Preferably, the user input unit sets the execution environment of the emergency alert system to decide whether to receive and output information for an emergency per a mode for outputting an external A/V data instead of a cable broadcast mode according to a user's preference.

Preferably, the user input unit is set by a user using a displayed UI.

In another aspect of the present invention, in a cable broadcast receiver including a cable card and a host, a data structure, in which the cable card requests diagnostic information from the host, includes a field enabling the diagnostic information to be used in identifying the diagnostic information for an execution environment of an emergency alert system.

In a further aspect of the present invention, in a cable broadcast receiver including a cable card and a host, a data structure, in which the host transmits diagnostic information to the cable card, includes at least one of a field including setting information for receiving and outputting information for an emergency corresponding to a priority over a predetermined reference according to a user's preference and a field including setting information for deciding whether to receive and output the information for the emergency per a mode for outputting external A/V data instead of a cable broadcast mode according to the user's preference.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a conceptional diagram of a general cable broadcast network;

FIG. 2 is a diagram of a method of communications between a host and a cable card;

FIG. 3 is an exemplary diagram of a table including diagnostic information according to the present invention;

FIG. 4 is another exemplary diagram of a table including diagnostic information according to the present invention;

FIG. 5 is a diagram of an example of a syntax of `diagnostic_cnf()' in case of receiving a single stream (S-mode) according to the present invention;

FIG. 6 is a diagram of an example of a syntax of 'diagnostic_cnf()' in case of receiving a multi-stream (M-mode) according to the present invention;

FIG. 7 is a diagram of an example of a syntax of 'HOST_EAS_status_report()' according to the present invention;

FIG. 8 is an exemplary diagram of priority of an emergency alert system according to the present invention;

FIG. 9 is another exemplary diagram of priority of an emergency alert system according to the present invention;

FIG. 10 is a diagram of a table for deciding whether to operate an emergency alert system in case of an external input except a cable broadcast according to the present invention;

FIG. 11 is a block diagram of a broadcast receiver controlling an emergency alert system according to one embodiment of the present invention;

FIG. 12 is a flowchart of a method of controlling an emergency alert system according to one embodiment of the present invention; and

FIG. 13 is a flowchart of a method of controlling an emergency alert system according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

First of all, only information for an emergency of concern can be provided according to a level of user's concern. In case of an external input mode instead of a cable broadcast mode, an emergency alert system can be efficiently operated.

For clear and obvious explanation, 'a mechanism for communications between a host and a cable card according to a first embodiment of the present invention', 'a table newly defining diagnostic IDs according to a second embodiment of the present invention', 'a method of defining a syntax of diagnostic_cnf() according to a type of a stream according to a third embodiment of the present invention', 'various cases of operating an emergency alert system according to a user's setup according to fourth embodiment of the present invention', 'a broadcast receiver according to a fifth embodiment of the present invention' and 'a method of controlling an emergency alert system according to a sixth embodiment of the present invention' are described in turn as follows.

First Embodiment

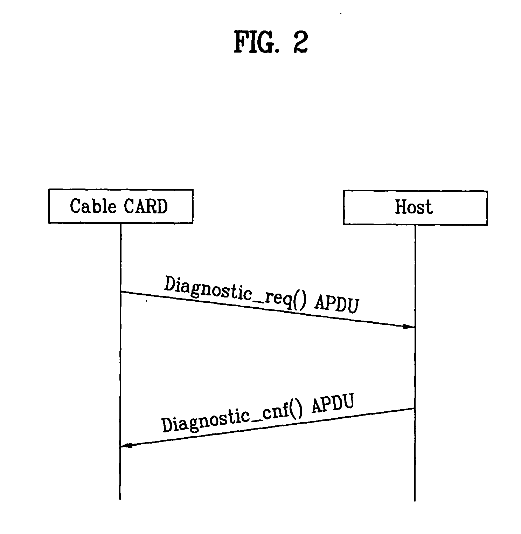

FIG. 2 is a diagram of a method of communications between a host and a cable card.

A mechanism for communications between a host and a cable card according to the present invention is explained with reference to FIG. 2 as follows.

Referring to FIG. 2, in case of receiving a diagnostic command for a status of a host connected to a cable card CableCARD from a cable headend or user, the cable card CableCARD can deliver the received diagnostic command to the host according to a predetermined protocol.

In particular, the status of the host connected to the cable card means information set up by the user for an operational or applying method of an emergency alert system.

And, the information set up by the user means information for a tuning to an emergency alert channel according to a priority of an emergency or information for outputting an emergency warning message.

Yet, they will be explained in detail in the description of the second to fourth embodiments of the present invention.

Meanwhile, having received the diagnostic command from the cable card, the host collects its diagnostic status information and then transfers the collected diagnostic information to the cable card according to a predetermined protocol.

In this case, the predetermined protocol includes a generic diagnostic protocol in case of an open cable for example.

The generic diagnostic protocol is a protocol stipulated to monitor various kinds of status information for devices connected to various system informations of a host in a local (user) or remote place (cable MSO) by real time.

According to this protocol, the cable card transmits the diagnostic command to the host by a diagnostic request protocol and the host then transmits a response for the requested diagnostic command to the cable card by a diagnostic confirm protocol.

In FIG. 2, the generic diagnostic protocol is shown for the communication method between the host and the cable card. In this case, the diagnostic request protocol and the diagnostic response protocol are represented as 'Diagnostic_req() APDU (application protocol data unit)' and 'Diagnostic_cnf() APDU', respectively, for example.

So, if the host collects and transmits its status diagnostic information to the cable card according to the diagnostic response protocol, the cable card transmits the status diagnostic information received from the host to the cable head end located in a remote place or outputs it to a screen of the host via a cable menu interface implemented in the host.

In this case, if a user selects a diagnostic item from a cable menu of the host using the cable menu interface, the cable menu interface can transmit the selected item in a format of HTML (hypertext markup language) file or the like to the host to display it on the screen.

In this case, the cable menu interface can designate a user conversation window that enables the user to recognize the diagnostic information.

In a method of transmitting user setup information for an emergency alert system according to the present invention, the host transmits the user setup information for the emergency alert system to the cable headend and the like via the cable card using a predetermined protocol such as the generic diagnostic protocol.

As mentioned in the foregoing description, the generic diagnostic protocol is one example of transport specifications that can implement the present invention, to which a technical idea of the present invention is not limited.

Yet, in the present invention, if diagnostic information is transmitted using a diagnostic information transport specification defined by various specifications of cable broadcasting, compatibility for a cable broadcast receiver and a diagnostic information transmitting method, to which the specifications are applicable, can be obtained.

Second Embodiment

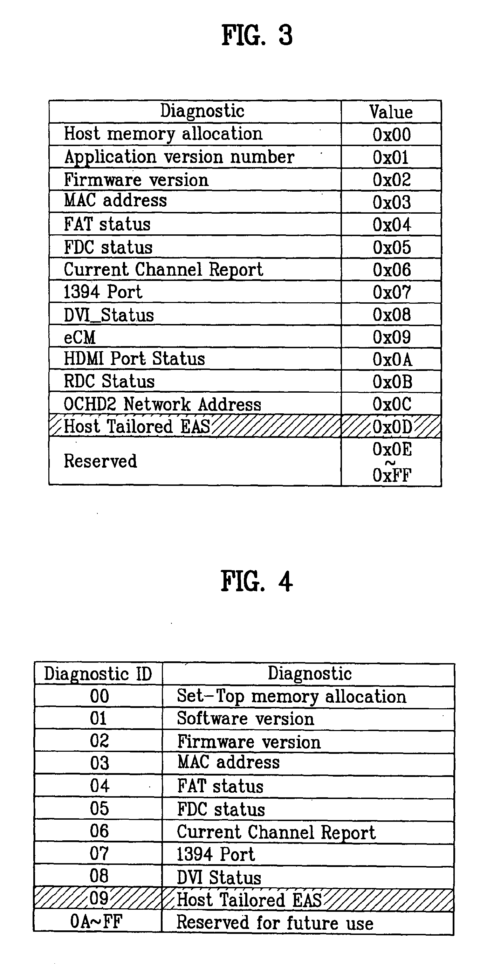

FIG. 3 is an exemplary diagram of a table including diagnostic information according to the present invention.

And, FIG. 4 is another exemplary diagram of a table including diagnostic information according to the present invention.

Tables newly defining diagnostic ID according to the present invention are explained with reference to FIG. 3 and FIG. 4 as follows.

First of all, in order to implement a generic diagnostic protocol according to the present invention, a diagnostic ID meaning information for a status of an emergency alert system needs to be defined.

Referring to FIG. 3, if the diagnostic ID has a value of '0x0D', the generic diagnostic protocol is used as a protocol for sending information for a status of an emergency alert system.

Referring to FIG. 4, if the diagnostic ID has a value of '09', the generic diagnostic protocol can be defined to use as a protocol for sending information for a status of an emergency alert system.

Of course, theses numeral values are just exemplary.

Yet, the implementation shown in FIG. 3 is applicable if a cable card is a single stream card, a cable card or a multi-stream card. So, a case of defining a diagnostic ID in a manner of FIG. 3 is explained as follows.

Referring to FIG. 3, if a cable card makes a request for status information by setting a diagnostic ID value to '0x0D' to a host according to a diagnostic request protocol, the host creates status diagnostic information of an emergency alert system collected by the diagnostic ID value according to a diagnostic response protocol and then transmits the created information to the cable card.

For reference, if the diagnostic ID value is '0x08', it means that the cable card makes a request for a creation of DVI status information to the host. If the diagnostic ID value is '0x0A', the cable card instructs the host to check a status of HDMI (high definition multimedia interface) port. Besides, a plurality of diagnostic informations (eCM, RDS status, OCHD2 Network Address) can be used as diagnostic ID for diagnosis.

An interface between a cable card and a host can be classified into a single-stream cable card interface type and a multi-stream cable card interface type.

In the single-stream cable card interface, a cable card processes a single broadcast stream and a host descrambles the single broadcast stream. In the multi-stream cable card interface, a cable card processes at least two multiplexed broadcast streams and a host descrambles the at least two broadcast streams.

For a case (hereinafter called 'S-mode') that a cable card descrambles a single-stream and a case (hereinafter called 'M-mode') that a cable card descrambles multi-streams, an example of a syntax of a signal according to each diagnostic response protocol will be explained in the description of a third embodiment of the present invention.

Third Embodiment

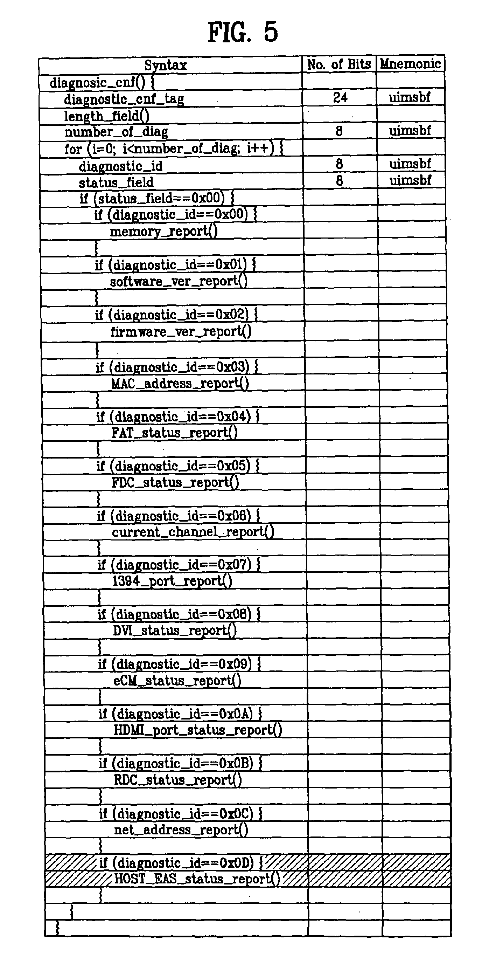

FIG. 5 is a diagram of an example of a syntax of 'diagnostic_cnf()' in case of receiving a single stream (S-mode) according to the present invention.

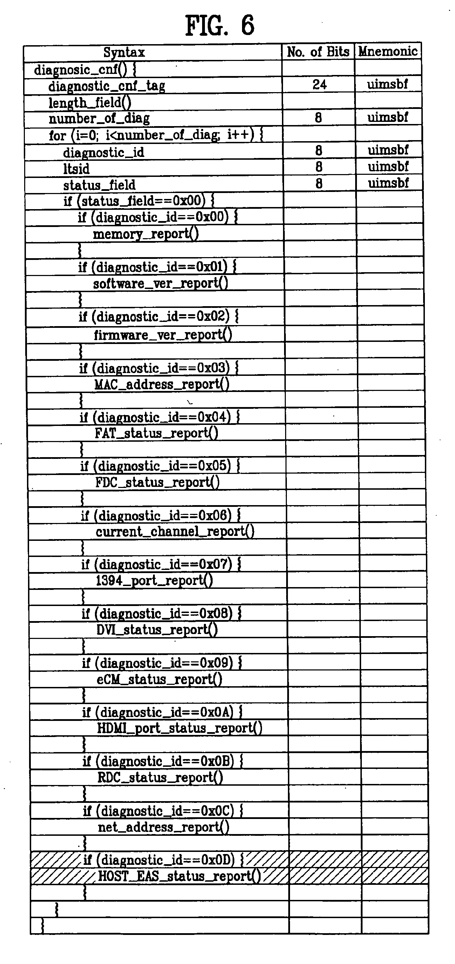

And, FIG. 6 is a diagram of an example of a syntax of 'diagnostic_cnf()' in case of receiving a multi-stream (M-mode) according to the present invention.

A method of defining 'diagnostic_cnf()' syntax per a stream type according to the present invention is explained with reference to FIG. 5 and FIG. 6 as follows.

First of all, a syntax of 'diagnostic_cnf()' in case of receiving a single stream (S-mode) is explained as follows.

If the example explained in FIG. 3 is cited, a cable card transmits a diagnostic request signal 'Diagnostic_req() APDU' to a host by setting a diagnostic ID value to '0x08' to decide DVI (digital video/visual interactive) status information.

The host collects DVI status diagnostic information, creates the collected result according to a diagnostic response protocol and then transmits the created result to the cable card.

First of all, the cable card parses a number (number_of_diag) of diagnostic informations included in the status diagnostic information transmitted by the host.

The cable card then executes 'DVI_status_report()" object having the diagnostic ID value of '0x08'. If so, the cable card is able to obtain the status information of DVI and then transmits the obtained information to the cable headend.

Specifically, the cable card is able to parse a status information signal of an emergency alert system created by the host according to a status diagnostic response protocol using the syntax shown in FIG. 5.

On the assumption that that the diagnostic ID value for the status information of the emergency alert system is defined as '0x0D' in FIG. 3, the cable card of the example shown in FIG. 5 is able to obtain the status information of the emergency alert system by receiving the collected status information of the emergency alert system and performing 'HOST_EAS_status_report()' object having the diagnostic ID value of '0x0D'.

A syntax of 'diagnostic_cnf()' in case of receiving a multi-stream (M-mode) according to the present invention is explained with reference to FIG. 6 as follows.

The syntax shown in FIG. 6 differs from the former syntax shown in FIG. 5 in that an ID of each of a plurality of multiplexed streams is declared.

Of course, by the example shown in FIG. 6, the cable card is able to obtain the status information of the emergency alert system by receiving the collected status information of the emergency alert system from the host and performing 'HOST_EAS_status_report()' object having the diagnostic ID value of '0x0D'.

Yet, the status information of the emergency alert system can be set by a user or the like. The status information of the emergency alert system can be set to output an emergency warning message according to a priority of the emergency or not. And, the status information of the emergency alert system is able to include information for deciding whether to output an emergency warning message in case of an external input/output mode instead of a cable broadcast output mode.

Besides, the status information of the emergency alert system and the 'HOST_EAS_status_report()' object will be explained in the description of a fourth embodiment of the present invention.

Fourth Embodiment

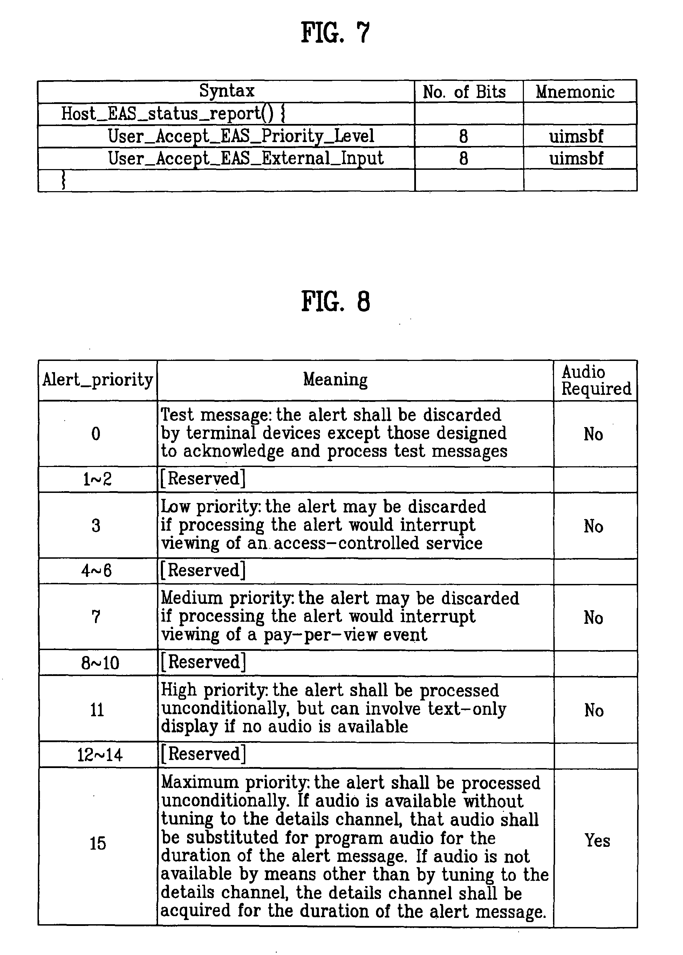

FIG. 7 is a diagram of an example of a syntax of 'HOST_EAS_status_report()' according to the present invention.

FIG. 8 is an exemplary diagram of priority of an emergency alert system according to the present invention.

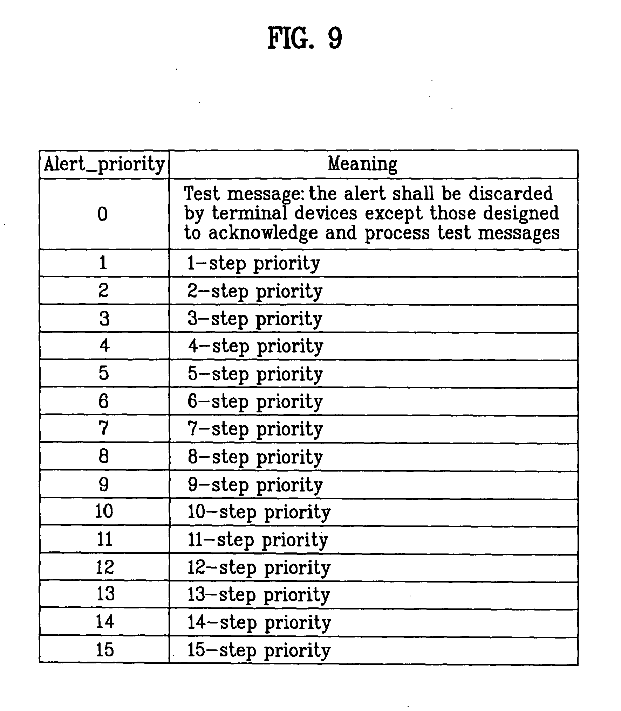

FIG. 9 is another exemplary diagram of priority of an emergency alert system according to the present invention.

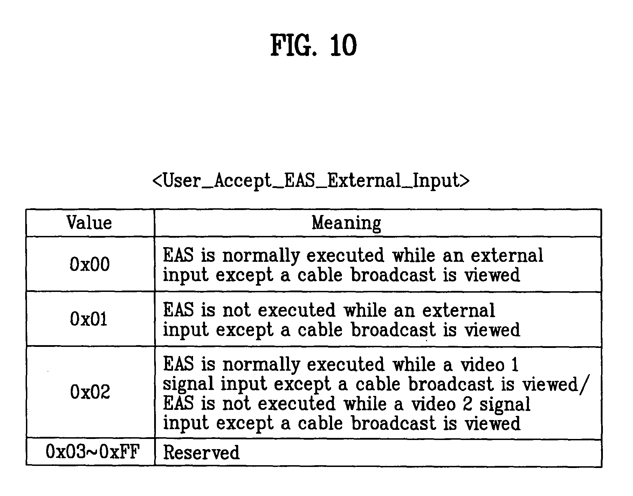

And, FIG. 10 is a diagram of a table for deciding whether to operate an emergency alert system in case of an external input except a cable broadcast according tot eh present invention.

An emergency alert system differently operated according to a status of the emergency alert system set by a user or the like is explained as follows.

First of all, if a cable cart transmits 'diagnostic_req() APDU' having a diagnostic ID of '0x0d' (HOST tailored EAS), a host transmits 'diagnostic_cnf() APDU' including 'HOST_EAS_status_report()' shown in FIG. 7 to the cable card for example.

In particular, the 'HOST_EAS_status_report()' syntax, as shown in FIG. 7, includes 'User_Accept_EAS_Priority_Level' field, 'User_Accept_EAS_External_Input' field and the like.

The 'User_Accept_EAS_Priority_Level' field can be used as a field for a user of a broadcast receiver having received emergency alert system information to decide whether to output the emergency alert system information for an emergency having a prescribed priority.

For instance, emergency priorities, as shown in FIG. 8, are classified into five steps. And, it can be configured to receive and output information of an emergency alert system only for an emergency exceeding a priority selected by a user.

For another instance, emergency priorities, as shown in FIG. 9, are classified into fifteen steps. And, it can be configured to receive and output information of an emergency alert system only for an emergency exceeding a priority selected by a user. And, the above explained five or fifteen steps are just exemplary.

Meanwhile, the reception and output of the information of the emergency alert system may mean an activity of a forcible tuning to a channel carrying news relating to an emergency or a display of news relating to an emergency in a message or audio format by maintaining a current channel.

Besides, the 'User_Accept_EAS_External_Input' field can be used as a field for deciding whether to receive and output information of the emergency alert system in case that external input A/V data except a cable broadcast is being outputted.

In this case, the external input A/V data except the cable broadcast may include terrestrial broadcast data, video 1 signal data, video 2 signal data, PC input data or the like.

For instance, if a value of the 'User_Accept_EAS_External_Input' field, as shown in FIG. 10, is '0x00', an emergency alert system can be set to be normally executed while external input A/V data except a cable broadcast is being outputted.

If a value of the 'User_Accept_EAS_External_Input' field is set to '0x01', it is able to set an emergency alert system not to operate at all while external input A/V data except a cable broadcast is being outputted.

If a value of the 'User_Accept_EAS_External_Input' field is set to '0x02', it is able to set an emergency alert system to operate or not to operate at all according to a type of external input A/V data by subdividing a time that the external input A/V data except a cable broadcast is being outputted.

Meanwhile, the emergency alert system may mean an activity of a forcible tuning to a channel carrying news relating to an emergency or an activity of displaying news relating to an emergency in a message or audio format by maintaining a current channel.

Fifth Embodiment

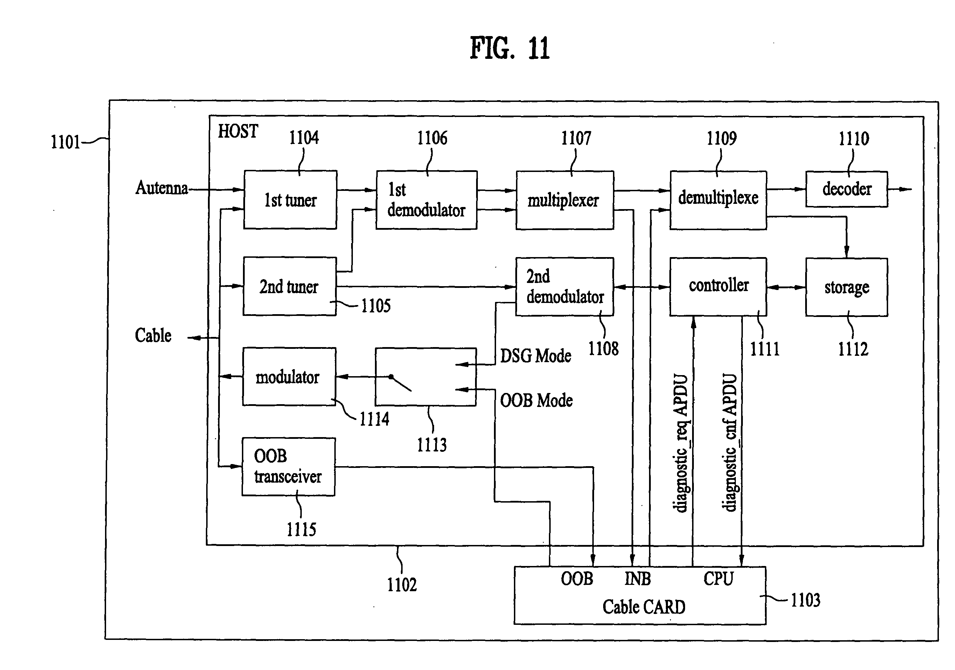

FIG. 11 is a block diagram of a broadcast receiver controlling an emergency alert system according to one embodiment of the present invention.

Operations of elements of a cable broadcast receiver controlling an emergency alert system according to the present invention is explained with reference to FIG. 11 as follows.

In FIG. 11, a broadcast receiver 1101 may include a cable broadcast receiver. And, an example of employing a cable broadcast receiver as a broadcast receiver 1101 is explained in the following description.

Referring to FIG. 11, a cable broadcast receiver according to one embodiment of the present invention includes a host 1102 and a cable card 1103 loadable/unloadable in/from the host 1102. In general, the host 1102 is able to receive a cable broadcast signal only or at least one of broadcast signals of cable broadcasting, terrestrial broadcasting and satellite broadcasting.

In this embodiment of the present invention, the host 1102 is able to receive at least one of broadcast signals of cable broadcasting, terrestrial broadcasting and satellite broadcasting for example.

Meanwhile, a bi-directional communication system between a cable broadcast receiver and a broadcasting station can be classified into tow types. For an uplink service within an open cable, OOB (Out Of Band) mode or DSG (DOCSIS Settop Gateway) mode is available.

So, a viewer can select to view a specific program via the host 1102 using one of the two modes. A user can directly participate in a broadcast program or select to view necessary information.

And, a data broadcast service can be offered via the OOB or DSG mode.

The OOB mode is a standard that stipulates a transmission specification between a cable broadcasting station (cable headend) and an InterSec (international commercial services) equipment within a settop box.

On the other hand, the DSG mode indicates a transmission mode between a cable modem control system of a cable broadcasting station and a DOCSIS based cable modem within a settop box. In this case, the DOCSIS can transmit data using a cable modem.

In this embodiment of the present invention shown in FIG. 11, a cable broadcast receiver employing hybrid OOB-and-DSG mode is represented.

The host 1002, as shown in FIG. 11, includes a first tuner 1104, a second tuner 1105, a first demodulation unit 1106, a multiplexing unit 1107, a demultiplexing unit 1109, a decoding unit 1110, a second demodulation unit (DOCSIS) 1108, an OOB transmitting/receiving unit 1115, a switching unit 1113, a modulation unit 1114, a control unit 1111 and a storage unit 1112.

The first tuner 1104 tunes a specific channel frequency of a terrestrial A/V (audio/video) broadcast transmitted via an antenna or a cable A/V broadcast transmitted by in-band via a cable only and then outputs it to the first demodulation unit 1106.

Terrestrial broadcasting differs from cable broadcasting in a transmission system. Yet, the first demodulation unit 1106 is capable of performing different demodulations on signals of different modulation schemes, respectively. If a terrestrial A/V broadcast is modulated by VSB (vestigial sideband modulation) to be transmitted and if a cable A/V broadcast is modulated by QAM (quadrature amplitude modulation) to be transmitted, the first demodulation unit 1106 performs a demodulation of a signal by VSB or QAM according to the signal selected by the first tuner 1104.

The signals demodulated by the first demodulation unit 1106 are multiplexed by the multiplexing unit 107 to be outputted to the cable card 1103 in case of cable broadcasting or to the demultiplexing unit 1106 in case of terrestrial broadcasting.

In this embodiment shown in FIG. 11, the cable card 1103 is regarded as capable of processing multi-streams. Hence, the cable card 1103 enables a user to view an inputted broadcast having at least two streams multiplexed via the host 1102.

The demultiplexing unit 1109 receives the multiplexed broadcast signal and then demultiplexes the received broadcast signal into a plurality of streams to output.

The decoding unit 1110 receives to decode the broadcast signal demultiplexed by the demultiplexing unit 1109. If so, an audio/video (A/V) signal viewable by a user is outputted.

The second tuber 1105 tunes a specific channel frequency among data broadcasts transmitted via a cable in DSG mode and then outputs it to the second demodulation unit 1108. The second demodulation unit 1108 demodulates the DSG-mode data broadcast and then outputs the demodulated broadcast signal to the control unit 1111.

The OOB transmitting/receiving unit 1115 tunes a specific channel frequency for a downlink data broadcast transmitted in OOB mode via a cable and then outputs it to the cable card 1103.

In case that bi-directional communications between a cable broadcasting station (not shown in the drawing) and the cable broadcast receiver is possible, uplink informations (e.g., pay-program request, diagnostic information of host, etc.) transmitted from the cable broadcast receiver to the cable broadcasting station can be transmitted in OOB or DSG mode. Hence, the cable broadcast receiver according to one embodiment of the present invention can include the switching unit 1113 capable of selecting one of the modes to transmit information.

In the OOB mode, user information or system diagnostic information is outputted to the modulation unit 1114 via the cable card 1103 and the switching unit 1113. The modulation unit 1114 modulates the output signal by QPSK (quadrature phase shift keying) modulation or the like and then transmits the modulated signal to the cable broadcasting station via the cable.

If user's broadcast information is transmitted in DSG mode, the information is outputted to the modulation unit 1114 via the control unit 1111 and the switching unit 1113 and is then modulated by the modulation unit 1114 according to QAM-16 (quadrature amplitude modulation-16) or the like. The modulated signal is transmitted to the cable broadcasting station via the cable.

Operations of the respective elements of the present invention are explained in detail as follows.

In case that a status diagnostic request of an emergency alert system is transmitted to the control unit 1111 from the cable card 1103, the control unit 1111 reads diagnostic information for a status of the emergency alert system from the storage unit 1112 and then transmit the read diagnostic information to the cable card 1103.

In this case, the storage unit 1112 can include a hard disc drive, a memory card or the like.

The cable card 1103 transmits diagnostic information for the status of the emergency alert system to the cable broadcasting station (cable headend) and the like. The cable broadcasting station or the like transmits control information for another emergency alert system to the cable broadcast receiver according to the diagnostic information for the status of the emergency alert system.

The control information for the emergency alert system may mean information associated with an activity of a forcible tuning to a channel broadcasting news relating to an emergency or an activity of displaying news relating to an emergency in a message or audio format by maintaining a current channel.

Namely, the cable card 1103 is able to make a request for a status diagnosis of the emergency alert system using a status diagnostic request protocol for the status of the emergency alert system to the control unit 1111 of the host 1102.

The control unit 1111 receives the status diagnostic information for the emergency alert system from the storage unit 1112 and is then able to transmit the received status diagnostic information to the cable card 1103 according to a diagnostic response protocol.

Yet, in FIG. 11, an example of the status diagnostic request protocol is represented as 'diagnostic_req APDU' and an example of the status diagnostic response protocol is represented as 'diagnostic_cnf APDU'.

In this case, the host 1102 is able to create to transmit status diagnostic information of the emergency alert system to the cable card 1103. If so, the cable card 1103 having received the status diagnostic information transmits the status diagnostic information to the cable headend (cable broadcasting station, etc.) via the cable network. The cable headend is then able to recognize the status of the emergency alert system of the host 1102 of each cable broadcast receiver.

Sixth Embodiment

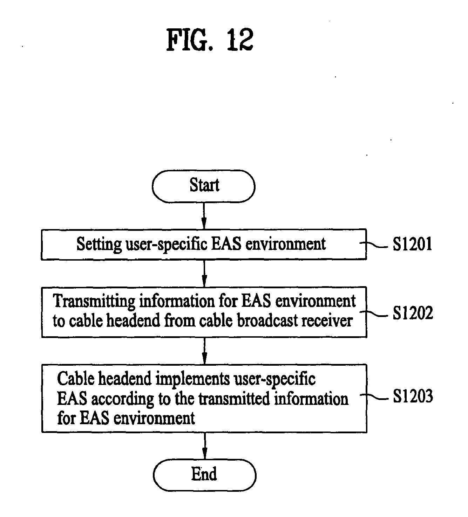

FIG. 12 is a flowchart of a method of controlling an emergency alert system according to one embodiment of the present invention.

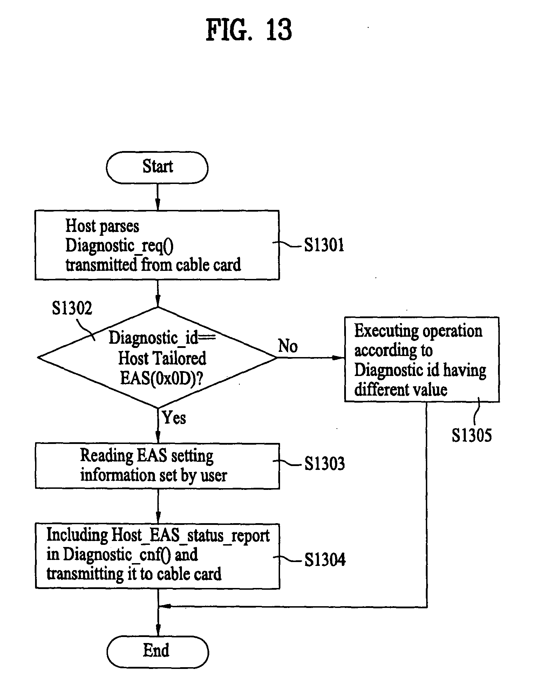

And, FIG. 13 is a flowchart of a method of controlling an emergency alert system according to another embodiment of the present invention.

A method of controlling an emergency alert system according to the present invention is explained with reference to FIG. 12 and FIG. 13 in turn as follows.

Yet, the present embodiment is to summarize the first to fifth embodiments in turn. So, even if its detailed description is omitted, the sixth embodiment of the present invention can be easily understood by those skilled in the art.

Referring to FIG. 12, a user of a cable broadcast receiver or the like is able to set information for a specific EAS (emergency alert system) status or environment (S1201).

In this case, the information for the specific EAS (emergency alert system) status or environment can include information for deciding whether the EAS is allowed to operate for an emergency having a priority over a specific level or to operate in a mode that is not a cable broadcast mode.

The cable broadcast receiver is able to transmit the information set for the EAS status or environment to a cable headend (S1202).

The cable headend is able to implement a user-specific EAS according to the transmitted information for the EAS status or environment (S1203).

For instance, the cable headend transmits a warning message for the emergency having the priority over the predetermined level set by the user to each cable broadcast receiver.

Yet, prior to implementing the step S1202, a method of exchanging the information for the EAS status or environment between a host within the able broadcast receiver and a cable card is shown in FIG. 13.

Referring to FIG. 13, the host is able to parse 'Diagnostic_req()' transmitted from the cable card (S1301).

It is decided whether a value of 'Diagnostic_id' of the parsed 'Diagnostic_req()' is '0X0D' (Host tailored EAS) (s1302).

As a result of the decision (Sl302), if the value of 'Diagnostic_id' of the parsed 'Diagnostic_req()' is '0X0D' (Host tailored EAS), EAS setting information set by a user or the like is read from a storage unit (S1303).

Yet, the EAS setting information set by a user or the like can be defined below 'Host_EAS_status_report()' syntax.

The host enables the information below the 'Host_EAS_status_report()' syntax to be included in 'Diagnostic_cnf()' and then transmits it to the cable card (S1304).

Meanwhile, as a result of the decision (S1302), if the value of 'Diagnostic_id' of the parsed 'Diagnostic_req()' is not '0X0D' (Host tailored EAS), an operation corresponding to each defined 'Diagnostic_id' is executed (S1305).

Accordingly, the present invention provides the following effects or advantages.

First of all, information for a concerned emergency according to a user's concerning level can be provided. Despite an external input mode instead of a cable broadcast mode, an emergency alert system can be efficiently operated.

For instance, an emergency very important to a user of a broadcast receiver is discriminated from a less important emergency using a diagnostic scheme and the discriminated information is transmitted to a cable broadcasting station. Hence, a user-specific emergency alert system can be implemented.

Secondly, in a cable broadcast receiver, in case of an external input viewing mode instead of a cable broadcast mode, whether to execute an emergency alert system can be decided according to a user's preference, whereby user's convenience is enhanced.

Thirdly, the cable card defined in the aforesaid specification of the present invention is able to execute conventional functions by downloading a software CAS provided by a provider to a subscriber's settop box or a settop-box built-in TV instead of providing a conventional hardware CAS module to the subscriber's settop box or the settop-box built-in TV.

In particular, the software CAS module download can be achieved by downloading CA (conditional access) image from a headend automatically if a security processor previously built in a settop box is connected to a network.

Meanwhile, terminologies used in the present invention are defined according to functions of the present invention, which can vary according to usual practice or intentions of technical experts attending to the corresponding field. Hence, the definitions should be given based on the overall contents of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of controlling a host operating an emergency alert system of cable broadcasting, comprising the steps of:
setting an execution environment of the emergency alert system;
transmitting status diagnostic information for the execution environment of the emergency alert system to a cable card; and
executing the emergency alert system individually by the host on a limited condition according to the set execution environment of the emergency alert system.

2. The method of claim 1, the step of transmitting the status diagnostic information for the execution environment of the emergency alert system to the cable card, comprising the steps of:
receiving a request for the status diagnostic information from the cable card; and
deciding whether the status diagnostic information for the execution environment of the emergency alert system is included in the status diagnostic information.

3. The method of claim 2, wherein the step of deciding whether the status diagnostic information for the execution environment of the emergency alert system is included in the status diagnostic information is carried out by parsing a diagnostic ID (diagnostic_ID).

4. The method of claim 1, wherein in the step of transmitting the status diagnostic information for the execution environment of the emergency alert system to the cable card, the status diagnostic information is transmitted according to a status diagnostic response protocol (diagnostic_cnf() APDU (application protocol data unit)).

5. The method of claim 1, wherein in the step of setting the execution environment of the emergency alert system, the execution environment of the emergency alert system is set to just receive and output information for an emergency corresponding to a priority over a predetermined reference according to a user's preference.

6. The method of claim 1, wherein in the step of setting the execution environment of the emergency alert system, the execution environment of the emergency alert system is set to decide whether to receive and output information for an emergency per a mode for outputting an external A/V data instead of a cable broadcast mode according to a user's preference.

7. The method of claim 1, wherein in the step of setting the execution environment of the emergency alert system, the execution environment of the emergency alert system is set by a user using a displayed UI.

8. A method of controlling a cable card operating an emergency alert system of cable broadcasting, comprising the steps of:
making a request for status diagnostic information for an execution environment of the emergency alert system to a host;
receiving the status diagnostic information from the host; and
transmitting the received information to a cable broadcasting station.

9. The method of claim 8, wherein in the step of making the request for the status diagnostic information for the execution environment of the emergency alert system to the host, the status diagnostic information is requested according to a status diagnostic request protocol (diagnostic_req() APDU (application protocol data unit)).

10. A host operating an emergency alert system of cable broadcasting, comprising:
a tuner unit receiving a cable broadcast including emergency alert system associated data;
a demodulator unit demodulating the received cable broadcast;
a user input unit setting an execution environment of the emergency alert system;
a transmitter unit transmitting status diagnostic information for the execution environment of the emergency alert system; and
a controller unit controlling the emergency alert system individually on a condition that the host is restricted according to the set execution environment of the emergency alert system.

11. The host of claim 10, the transmitter unit further comprising a decision unit deciding whether the status diagnostic information for the execution environment of the emergency alert system is included in the status diagnostic information if the status diagnostic information is received from the cable card.

12. The host of claim 11, wherein the decision unit decides whether the status diagnostic information for the execution environment of the emergency alert system is included in a manner of parsing a diagnostic ID (diagnostic_ID).

13. The host of claim 10, wherein the transmitter unit transmits the status diagnostic information according to a status diagnostic response protocol (diagnostic_cnf() APDU (application protocol data unit)).

14. The host of claim 10, wherein the user input unit sets the execution environment of the emergency alert system by enabling information for an emergency corresponding to a priority over a predetermined reference to be received and outputted only according to a user's preference.

15. The host of claim 10, wherein the user input unit sets the execution environment of the emergency alert system to decide whether to receive and output information for an emergency per a mode for outputting an external A/V data instead of a cable broadcast mode according to a user's preference.

16. The host of claim 10, wherein the user input unit is set by a user using a displayed UI.

17. In a cable broadcast receiver including a cable card and a host, a data structure, in which the cable card requests diagnostic information from the host, the data structure comprising a field enabling the diagnostic information to be used in identifying the diagnostic information for an execution environment of an emergency alert system.

18. In a cable broadcast receiver including a cable card and a host, a data structure, in which the host transmits diagnostic information to the cable card, the data structure comprising at least one of a field including setting information for receiving and outputting information for an emergency corresponding to a priority over a predetermined reference according to a user's preference and a field including setting information for deciding whether to receive and output the information for the emergency per a mode for outputting external A/V data instead of a cable broadcast mode according to the user's preference.
